Europäisches Patentamt

European Patent Office

Office européen des brevets

(19)

(11) Numéro de publication: **0 000 069**
**B1**

(12) **FASCICULE DE BREVET EUROPEEN**

(21) Numéro de dépôt: **78100128.4**

(22) Date de dépôt: **08.06.78**

(51) Int. Cl.³: **H 04 N 1/032, B 41 J 3/20, G 01 D 15/06, G 03 G 17/00**

(54) Barrette d'impression d'une image.

(30) Priorité: **13.06.77 FR 7718011**

(43) Date de publication de la demande:
**20.12.78 Bulletin 78/1**

(45) Mention de la délivrance du brevet:
**18.02.81 Bulletin 81/7**

(84) Etats Contractants Désignés:
**BE DE FR GB LU NL SE**

(56) Documents cités:
**DE - A - 2 640 048**
**FR - A - 2 270 562**
**GB - A - 1 468 258**
**US - A - 3 235 942**
**US - A - 3 551 661**
**US - A - 3 553 718**

**TECHNISCHE MITTEILLUNGEN**
**AEG-TELEFUNKEN**
**vol. 64, nr. 6, 1974, Berlin,**
**SUESSENBACH "Grundlagen eines electro-**
**sensitiven Rasterdruckverfahrens", pages 193 à**
**197**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Yvard, Marcel**
**11, rue de la Source Ollainville**
**F-91290 Arpajon (FR)**
(72) Inventeur: **Decuyper, Jean-Claude**
**13, allée de la Deule**
**F-78310 Elancourt (FR)**
(72) Inventeur: **Beduchaud, Michel**
**6, résidence de Villebon Villebon sur Yvette**
**F-91120 Palaiseau (FR)**

(74) Mandataire: **Weinmiller, Jürgen et al,**
**Zeppelinstrasse 63**
**D-8000 München 80 (DE)**

Courier Press, Leamington Spa, England.

# Barrette d'impression d'une image

La présente invention porte sur une barrette d'impression d'une image sur un papier sensible. La barrette d'impression est, en particulier, utilisée dans un poste de reproduction de documents, appartenant à une installation de transmission de facsimilés.

Dans une installation de ce type, la restitution d'un document analysé dont le contenu est transmis au poste de reproduction est assurée par une tête ou barrette d'impression, venant balayer un papier sensible choisi, selon des lignes successives. La tête ou barrette est excitée par le signal d'information reçu par le poste de reproduction et définissant le contenu de la ligne balayée pour l'impression des points d'image successifs, le long de la ligne de balayage considérée.

La formation sur le papier de points d'image, donc de points de densité variable, consiste à déclencher, par réaction, une. modification localisée du papier utilisé, de manière à obtenir une variation de son aspect optique, par exemple une coloration. Le papier utilisé au poste récepteur peut donc être par exemple électro-sensible, électro-catalytique ou thermo-sensible. Le papier utilisé étant, par exemple, électro-catalytique, l'impression d'un point d'image est obtenue par application localisée sur le papier d'un stylet en matériau catalyseur choisi en fonction du papier et par passage d'un courant électrique entre le stylet et le papier: on provoque ainsi une catalyse accompagnée d'une modification de coloration du papier. Dans cet exemple, le papier peut-être constitué d'une couche externe de matériau sensible, d'une sous-couche conductrice et d'un papier de base les supportant. Le stylet peut par exemple être en argent ou recouvert d'argent; il vient en appui sur la couche externe.

L'impression d'une ligne complète d'image peut-être assurée par déplacement de la tête d'impression à stylet unique le long de la ligne de balayage du papier. L'impression d'une ligne complète de balayage peut aussi être obtenue par une barrette d'impression ayant autant de stylets d'impression que de points d'image dans la ligne. La barrette est statique par rapport à la ligne de balayage considérée, seul un déplacement relatif pas à pas du papier et de la barrette subsistera. La présente invention porte sur ce dernier type de barrette d'impression.

On connaît, par le document GB-A-1 468 258, une barrette d'impression de ce dernier type dans laquelle les stylets sont adressés individuellement au moyen de matrices d'adressage à diodes à partir de deux séries de générateurs de commande. Dans les réalisations données dans ce document, la barrette comporte deux ensembles: l'un constitue une tête d'impression équipée des électrodes et de conducteurs respectifs de raccordement, l'autre constitue les matrices d'adressage des stylets à couples de composants discrets, diode et résistance, connectés respectivement à deux réseaux orthogonaux de conducteurs formant les lignes et colonnes de matrices et aboutissant à des bornes de contact pour les deux séries de générateurs de commande. La connexion électrique entre ces deux ensembles est assurée par des liaisons respectives entre les couples diode-résistance et les conducteurs de raccordement.

On connaît également, par le document DE-A-2 640 048 une barrette d'impression de ce même type à commande individuelle des stylets. Cette barrette est formée par un empilement de plaquettes conductrices isolées les unes des autres et dont une première extrémité de chacune d'elles forme l'un des stylets et dont une deuxième extrémité sensiblement opposée forme une borne de commande pour le stylet de la plaquette considérée.

Alors que la barrette décrite dans le document DE-A-2 640 048 exige une borne de commande par stylet, celle décrite dans le document GB-A-1 468 258 permet par l'utilisation de matrices d'adressage des stylets de réduire le nombre de bornes de commande des stylets tout en assurant leur commande individuelle. La réalisation de cette barrette avec matrices d'addressage des stylets demeure cependant peu aisée du fait du nombre très important de liaisons à effectuer tant lors de la constitution de l'ensemble des matrices que de sa liaison électrique avec la tête d'impression.

La présente invention a pour but de réaliser une barrette d'impression du type précité avec matrices à diodes d'adressage des stylets de structure compacte dans laquelle les composants des matrices sont totalement intégrés et protégés et montés pour obtenir directement les liaisons électriques convenables.

La présente invention a pour objet une barrette d'impression d'une image sur un papier sensible, par balayage du papier selon des lignes successives, comportant une pluralité de stylets d'impression alignés sur la longueur d'une ligne de balayage et disposés au pas de définition des points d'une ligne de balayage et comportant n matrices diagonales à diodes, pour l'adressage de stylets, dont les colonnes divisées en n ensembles identiques sont respectivement reliées aux stylets et sont alimentées respectivement à travers des résistances à partir de premières bornes d'alimentation respectivement affectées aux n matrices, et dont les lignes sont communes aux n matrices et connectées respectivement aux colonnes chacune à travers une diode et sont alimentées respectivement à partir de deuxièmes bornes d'alimentation respectivement affectées aux lignes, caractérisé en ce que ladite barrette est constituée par un empilement de plaquettes conductrices isolées les unes des autres et dont une première extrémité de chacune d'elles forme l'un des stylets, empilement dans lequel sont inclues lesdites résistances et lesdites diodes desdites n matrices et en ce que:

—les plaquettes considérées en n ensembles constituent les colonnes des n matrices et comportent chacune, d'une part, une première borne de contact insérée, à une deuxième extrémité sensiblement opposée à la première, dans la plaquette considérée en étant isolée de cette plaquette et reliée électriquement avec lesdites premières bornes de contact des autres plaquettes du même ensemble à la première borne d'alimentation affectée à la matrice correspondante et, d'autre part, une deuxième borne de contact insérée latéralement dans la plaquette considérée en étant isolée électriquement de cette plaquette et reliée électriquement par un conducteur électrique formant l'une des lignes des matrices aux deuxièmes bornes de contact des plaquettes de même rang dans les n ensembles et à la deuxième borne d'alimentation affectée à cette ligne,

—les résistances sont formées chacune par une couche de matériau résistif en contact électrique avec d'une part l'une des plaquettes et d'autre part la première borne de contact de la plaquette considérée ou de la plaquette adjacente,

—les diodes sont formées chacune par une couche de matériau semi-conducteur en contact électrique avec d'une part l'une des plaquettes et d'autre part le deuxième borne de contact de la plaquette considérée ou de la plaquette adjacente.

Les matrices d'adressage des stylets sont donc intégrées dans la barrette d'impression, au niveau des plaquettes portant ou incluant les stylets.

D'autres avantages de la présente invention apparaîtront au cours de la description ci-après faite en regard des schémas de réalisation donnés, à titre d'exemple, dans le dessin ci-annexé dans lequel:

—la figure 1 illustre un agencement d'éléments constitutifs d'une barrette d'impression selon l'invention,

—la figure 2 illustre, à une échelle agrandie, l'une des éléments retrant dans la barrette d'impression selon la figure 1,

—la figure 3 est une vue de dessus de la barrette d'impression dont les éléments constitutifs sont agencés selon la disposition donnée dans la figure 1,

—la figure 4 est une vue avant de la barrette d'impression dont les éléments constitutifs sont agencés selon la représentation donnée dans la figure 1,

—la figure 5 illustre un agencement, selon une variante par rapport à la figure 1, d'éléments constitutifs d'une barrette d'impression selon l'invention,

—la figure 6 représente le schéma électrique de la barrette selon l'invention,

—la figure 7 représente un exemple de réalisation du circuit de commande de la barrette.

La barrette d'impression qui va être décrite en regard du dessin ci-annexé est destinée à l'élaboration d'une image sur un papier sensible, l'impression de l'image étant obtenue par balayage du papier selon des lignes successives et impression de points d'image successifs le long de chaque ligne. A titre d'exemple, la barrette d'impression rentre dans un ensemble de reproduction de fac-similés, elle est statique sur le plan mécanique, le papier sensible sur lequel est formée l'image défilant pas à pas, sous l'action de moyens d'entraînement connus, en regard de la barrette pour l'impression des lignes de balayage successives du papier.

A titre d'exemple, la description de la barrette d'impression illustrée est donnée dans le cadre d'un ensemble de reproduction de fac-similés permettant une définition d'image de 1728 points par ligne de balayage du papier de 216 mm. Le papier choisi est de type électro-catalytique présentant de manière générale une grande sensibilité, c'est-à-dire nécessitant simplement une faible énergie pour son impression. Par exemple, il présente un aspect initial clair, l'impression est obtenue par coloration.

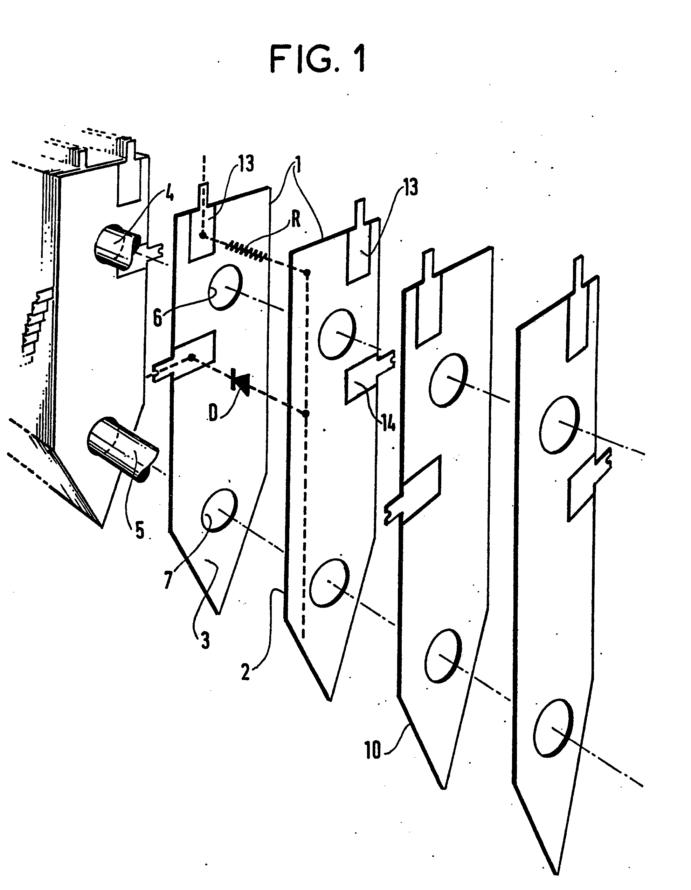

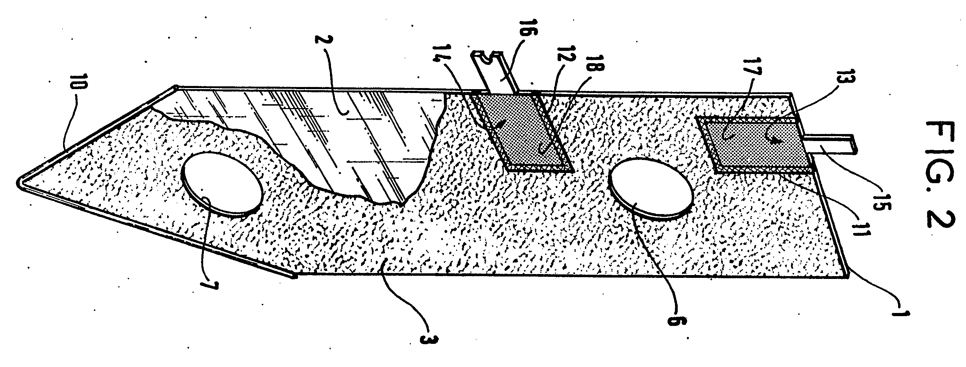

Dans la figure 1, on a schématisé un agencement des éléments constituant une telle barrette d'impression. La barrette est constituée par des plaquettes 1. Les plaquettes 1, dont une est représentée dans la figure 2, ont une face 2 électriquement conductrice, l'autre face 3 est électriquement isolante. Les plaquettes sont avantageusement en métal bon conducteur électrique et sont recouvertes sur une de leurs faces par un dépôt ou un vernis isolant, cette face étant la face isolante 3. Une extrémité 10 de chaque plaquette est en pointe et est recouverte d'une couche de matériau catalyseur bien défini, par exemple d'argent, pour constituer un stylet d'impression également repéré et désigné ci-après sous la référence 10. En variante, la plaquette totale sera en matériau ayant des propriétés catalytiques.

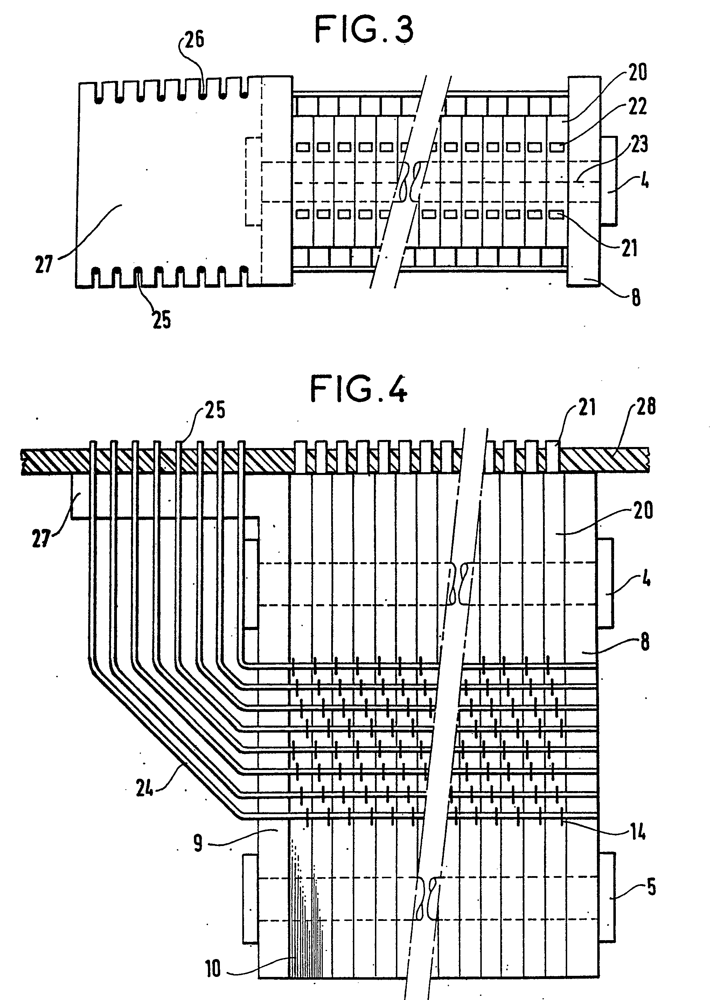

La barrette est constituée par un empilement de plaquettes conductrices 1, isolées électriquement les unes des autres. Cet empilement, apparaissant dans les figures 3 et 4, est effectué sur deux broches isolantes 4 et 5 traversant les plaquettes, au niveau de deux perçages 6 et 7 prévus identiquement dans chaque plaquette. Ces broches assurent le positionnement des plaquettes entre deux flasques isolants extrêmes de maintien 8 et 9. Les plaquettes 1, ainsi empilées, s'étendent sur la longueur de chaque ligne de balayage du papier, soit sur 216 mm. La barrette une fois constituée peut être rectifiée selon une génératrice longitudinale et présente, le cas échéant, au niveau des extrémités 10 ou stylets d'impression, un profil arrondi (non illustré), de façon à former un alignement correct des stylets disposés au pas de définition des points d'image à imprimer le long d'une ligne de balayage du papier.

La barrette d'impression ainsi constituée comporte un circuit d'adressage des stylets. Ce circuit d'adressage est intégré dans la barrette, au niveau des plaquettes.

En regard notamment des figures 1 ou 2, on voit que chaque plaquette 1 présente une première découpe 11, au niveau de l'extrémité opposée à la pointe constituant le stylet 10, et une deuxième découpe 12 latérale. Ces découpes 11 et 12 sont rectangulaires et sont ouvertes sur l'extérieur de la plaquette. Une première pièce conductrice 13 est insérée dans la découpe 11. Une deuxième pièce conductrice 14 est également insérée dans la découpe 12. Ces deux pièces 13 et 14 sont de forme générale rectangulaire et ont la même épaisseur que les plaquettes; elles sont isolées électriquement de la plaquette qui les reçoit, par exemple par une colle, un dépôt ou vernis isolant recouvrant leurs tranches, ainsi que schématisé. Elles sont maintenues dans la plaquette soit par la colle précitée, soit par le simple assemblage des plaquettes lors de la constitution de la barrette. Elles se terminent toutes deux par une queue de contact 15 ou 16 débordant au-delà de la plaquette servant de point de liaison électrique. Ces pièces 13 et 14 équipées de queue de contact 15 ou 16 sont appelées ci-après première borne de contact et deuxième borne de contact qui sont désignées ci-après sous les mêmes références 13 et 14.

Dans l'empilement de plaquettes 1 constituant la barrette, les premières bornes de contact 13 sont disposées alternativement d'un côté et de l'autre du plan longitudinal médian de la barrette, les premières bornes de contact insérées dans deux plaquettes adjacentes occupant une position symétrique par rapport à ce plan médian.

Dans l'empilement de plaquettes 1 constituant la barrette, les deuxièmes bornes de contact 14 sont disposées alternativement sur l'une et l'autre des deux faces latérales des plaquettes. Les deuxièmes bornes de contact 14 situées d'un même côté latéral sont en outre décalées les unes par rapport aux autres, c'est-à-dire que deux deuxièmes bornes de contact 14 appartenant à un même côté latéral sont situées à des niveaux différents.

Chacune des premières bornes de contact 13 porte, sur sa face située du côté de la face isolante de la plaquette qui la reççoit, une couche de matériau résistif 17, par exemple un dépôt de carbone. Ce matériau résistant est en contact électrique, d'une part avec la borne de contact 13 appartenant à la plaquette considérée et, d'autre part, avec la face conductrice en regard de la plaquette adjacente.

Une résistance électrique R, schématisée dans la figure 1, est ainsi formée entre deux plaquettes adjacentes. On a schématisé en tiretés le circuit électrique ainsi formé: la face conductrice d'une plaquette donnée, donc son stylet d'extrémité, est alimentée par la première borne de contact 13 appartenant à la plaquette amont, à travers la résistance électrique R formée entre ces deux plaquettes. On notera que la barrette comportera donc en pratique 1729 plaquettes, la première plaquette assurant simplement l'alimentation du premier stylet d'impression porté par la deuxième plaquette de l'empilement.

Chacune des deuxièmes bornes de contact 14 porte, sur sa face située du côté de la face isolante de la plaquette qui la reçoit, une couche ou une pastille de matériau semi-conducteur 18, par exemple de sélénium ou de sulfure de cadmium. Cette pastille semi-conductrice 18 est soudée, collée avec une colle électriquement conductrice ou maintenue par pression sur la deuxième borne de contact 14 avec laquelle elle est donc en contact électrique; elle est également en contact électrique avec la face conductrice en regard de la plaquette adjacente. On constitue une diode D, ainsi que schématisée dans la figure 1, entre deux plaquettes adjacentes, le sens de conduction de la diode constituée étant, ainsi qu'illustré, de la face conductrice d'une plaquette à la deuxième borne de contact 14 appartenant à la plaquette amont. Le circuit électrique complet, en tiretés, comporte, en outre, la diode D permettant de court-circuiter le stylet d'extrémité d'une plaquette à partir de la deuxième borne de contact 14 appartenant à la plaquette amont.

A titre d'exemple, le dépôt isolant formant la face isolante 3 de chaque plaquette, le dépôt résistant et le dépôt semi-conducteur effectués respectivement sur les bornes de contact 13 et 14, auront une épaisseur de l'ordre de 30 $\mu$m. Le dépôt isolant présentera avantageusement une certaine plasticité permettant une adaptation de la forme des faces isolantes des plaquettes dans l'empilement des plaquettes constitué.

Dans les figures 3 et 4, complétant avec les figures 1 et 2 la description de la barrette, on a représenté la barrette constituée d'ensembles 20 de plaquettes 1 (figures 1 et 2) empilées. Dans le cas illustré, on a constitué à partir des 1728 plaquettes portant les 1728 stylets d'impression, 108 ensembles 20, chacun de 16 plaquettes 1 ou stylets 10. Ces 108 ensembles sont identiques et s'étendent sur 216 mm.

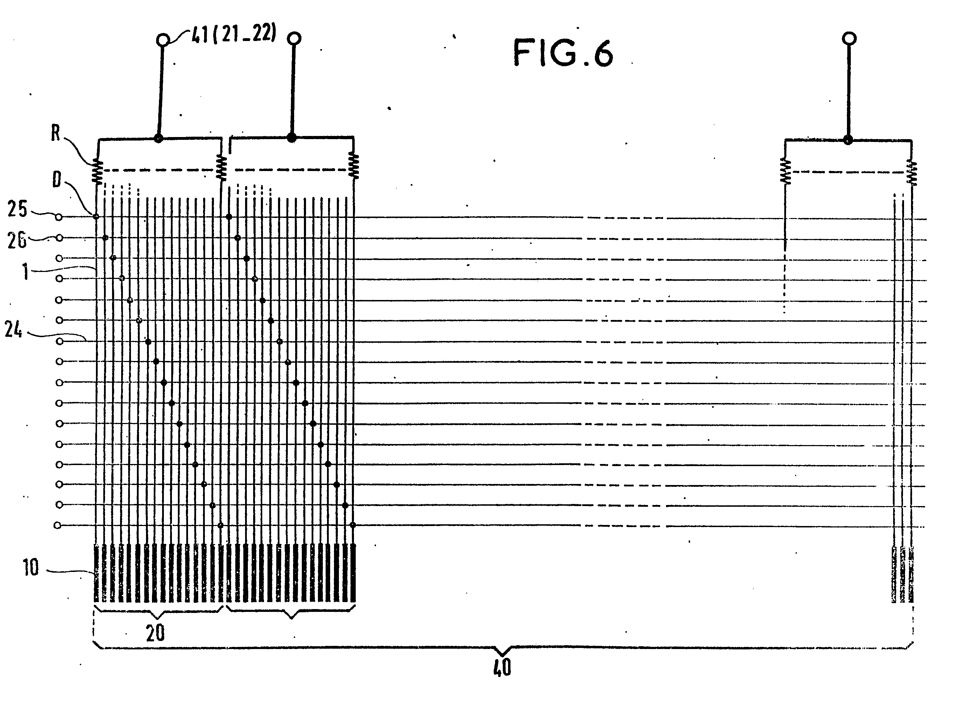

Au niveau de chaque ensemble 20, deux broches de contact 21 et 22, de part et d'autre du plan médian de la barrette indiqué par la ligne interrompue 23, regroupent chacune les queues des huit pièces conductrices 13, donc les huit premières bornes de contact 13. Dans chaque broche de contact 21 et 22, les huit premières bornes de contact correspondantes sont assemblées, par exemple soudées. On retrouve donc sur la face supérieure de la barrette deux rangées chacune de 108 broches 21 ou 22. Au niveau d'un même ensemble 20, les deux broches de contact 21 et 22 seront ultérieurement reliées électriquement l'une à l'autre (cette liaison n'est pas illustré) pour constituer une première borne d'alimentation 41 des plaquettes d'un même ensemble (voir figure 6).

L'emplacement de chaque deuxième borne de contact 14 a été schématisé par un petit bâtonnet. Au niveau de chaque ensemble 20, on voit sur une même face latérale (face avant de la barrette) huit deuxièmes bornes de contact 14, étagées sur la hauteur des plaquettes et décalées sur la largeur de l'ensemble 20 de manière à les rendre les plus accessibles possibles. Les huit deuxièmes bornes 14 considérées sont divisées en deux groupes de quatre bornes, les deux groupes étant disposés en deux lignes parallèles légèrement inclinées sur la verticale, les quatre bornes d'un même groupe sont séparées les unes des autres par trois plaquettes et se trouvent donc décalées sensiblement sur la largeur de l'ensemble 20. D'un ensemble 20 aux autres ensembles, cette disposition des bornes 14 est conservée. On retrouve donc, sur la face avant de la barrette, huit rangées chacune comportant 108 deuxièmes bornes de contact 14. Les 108 bornes de contact 14 d'une même rangée sont reliées électriquement par un conducteur électrique 24 soudé sur ces 108 deuxièmes bornes de contact. Ce conducteur 24 et les autres conducteurs identiques sur les sept autres rangées de la face avant forment un réseau de conducteurs qui rapportent les huit rangées de 108 bornes 14 au niveau de la face supérieure de la barrette: ils forment une rangée de huit broches 25 constituant huit deuxièmes bornes d'alimentation 25 des plaquettes. La face arrière de la barrette est identique à sa face avant. On y trouve un deuxième réseau de conducteurs, tels que 24, qui vient constituer une autre rangée de huit broches 26, au niveau de l'autre bord longitudinal de la face supérieure de la barrette. Ces broches 26 constituent huit autres deuxièmes bornes d'alimentation 26 des plaquettes. Les deuxièmes bornes d'alimentation 25 et 26 sont portées par un prolongement ou bras 27 du flasque isolant 9. Ce bras 27 est traversé par les extrémités des conducteurs tels que 24 qui sont insérées dans des encoches qui y sont prévues. Au niveau de la face avant et de la face arrière de la barrette, des flasques isolants (non illustrés) viennent recouvrir et maintenir les conducteurs tels que 24 isolés entre eux.

La barrette est complétée par une plaque de circuit imprimé 28n représentée simplement dans la figure 4. Cette plaque de circuit imprimé 28 est située sur la face supérieure de la barrette, et est traversée par les broches telles que 21 (22) et 25 (26) qui sont connectées au circuit de commande d'adressage des stylets. Avantageusement ce circuit de commande d'adressage sera porté par cette plaque de circuit imprimé 28.

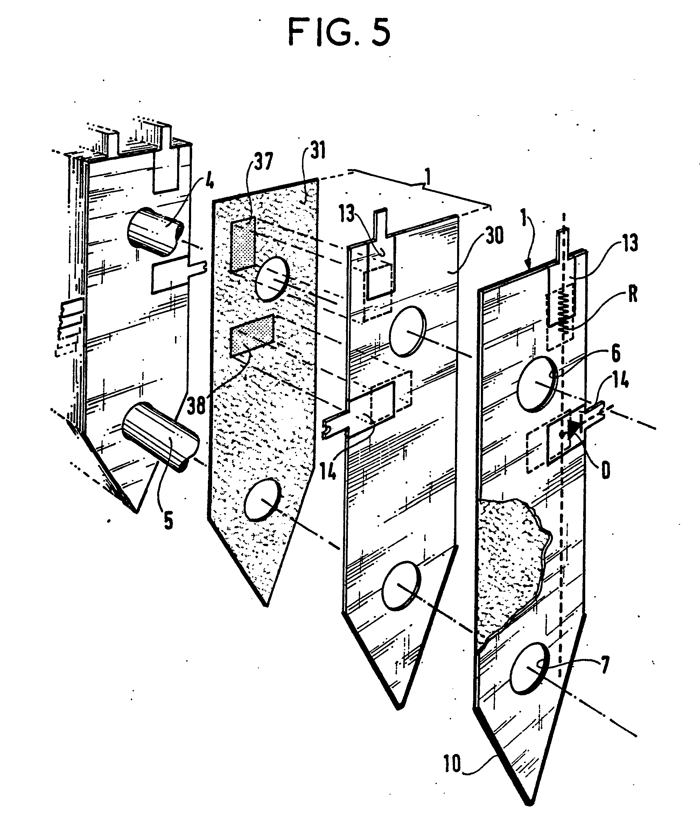

Dans la figure 5, on a illustré une variante d'organisation des éléments constituant une barrette d'impression. L'organisation illustrée dans cette figure 5 est expliquée comparativement à celle illustrée dans les figures 1 et 2 et de ce fait les parties identiques sont référencées identiquement. La barrette, non illustrée en totalité, est constituée par un empilement alterné de lamelles conductrices 30 et de lamelles isolantes 31. Un couple de lamelles, à savoir une lamelle conductrice et une lamelle isolante, constitue une des plaquettes 1 des figures précédentes présentant une face conductrice et l'autre isolante. Les lamelles conductrices 30 présentent chacune, comme chacune des plaquettes précédentes, deux découpes (découpes 11 et 12 précédentes de la figure 2) dans lesquelles sont respectivement insérées une première borne de contact et une deuxième borne de contact repérées également par les références 13 et 14 précédentes. Dans cette barrette les premières bornes de contact 13 sont alternativement disposées de part et d'autre du plan médian de la barrette. Les deuxièmes bornes de contact 14 sont alternativement situées sur l'une et l'autre des faces avant et arrière de la barrette, deux deuxièmes bornes consécutives d'une même face sont décalées l'une par rapport à l'autre de manière analogue à l'agencement décrit précédemment. Ces bornes de contact 13 et 14 sont en métal bon conducteur électrique et sont isolées des lamelles conductrices qui les portent.

La lamelle isolante 31, appartenant à chaque couple de lamelles 30—31 ou plaquette 1, porte en regard de la lamelle conductrice et de la première borne de contact 13, une couche de matériau résistif 37, par exemple un dépôt de carbone. Cette lamelle isolante porte également en regard de la lamelle conductrice et de la deuxième borne de contact 14 une couche ou pastille de matériau semi-conducteur 38. Ces couches 37 et 38 viennent lors de l'empilement des lamelles 30 et 31 chevaucher entre la face de la lamelle conductrice et la borne de contact correspondante (13 respectivement 14). Ces emplacements sont schématisés par les rectangles en pointillés à l'intérieur desquels on a schématisé une résistance électrique R et une diode D ainsi formées. Dans cette figure 5, par la ligne en tiretés, on a également indiqué le circuit électrique résultant. On voit que le stylet 10 d'extrémité d'une lamelle 30 (ou plaquette 1) est alimenté à partir de la première borne de contact 13 insérée dans cette lamelle, à travers la résistance R, et présente une diode D permettant de court-circuiter, ou non, le stylet à partir de la deuxième borne de contact 14 également insérée dans la lamelle considérée.

En variante non illustrée, correspondant au même schéma électrique, les dépôts résistif et semi-conducteur peuvent être faits sur la lamelle conductrice, respectivement aux emplacements indiqués par les rectangles en pointillés dans la figure 5.

Dans la figure 6, on a représenté le schéma électrique d'une barrette, selon les exemples décrits, incluant le circuit d'adressage des stylets 10. Le circuit d'adressage des stylets 10 de la barrette totale indiquée par une accolade 40, constitue 108 matrices diagonales, à diodes D, désignées chacune par la référence 20 affectée à chaque ensemble de seize plaquettes 1.

Dans chaque matrice diagonale, les seize colonnes sont constituées par les plaquettes conductrices 1 (face conductrice de la plaquette ou lamelle conductrice 30). Les seize colonnes 1 sont reliées à une première borne d'alimentation 41 formée par la liaison des deux broches 21 et 22 (figure 3), respectivement à travers seize résistances R. Les bornes d'alimentation, telles que la borne 41, sont indépendantes d'une matrice 20 à une autre.

Dans chaque matrice diagonale, les seize lignes sont constituées par les deux groupes de huit conducteurs 24 des faces avant et arrière de la barrette, chaque conducteur 24 étant connecté à une des seize diodes D, ici indiquée par un point, et à la deuxième borne d'alimentation 25 ou 26 correspondante. Les bornes 25 et 26 sont indépendantes. Selon l'organisation décrite précédemment, elles sont alternées, dans cette figure 6 on a rétabli l'ordre normal des lignes. Ces seize lignes 24 d'une matrice 20 sont communes aux 108 matrices de la barrette. Elle relient les diodes associées aux plaquettes de même rang appartenant aux 108 matrices.

A titre d'exemple, on indique que la tension appliquée sur l'une des bornes 41 sera de 0 ou 5 volts, celle appliquée sur l'une des bornes 25 ou 26 sera de 0 ou 5 volts. Le premier stylet de la première matrice 20 devant être commandé pour l'impression d'un point noir, on mettra la borne 41 de cette première matrice sous 5 volts, ainsi que la borne 25 reliée à la première ligne. Les autres bornes telles que 41 alimentant les colonnes des autres matrices, ainsi que les bornes 25 et 26 reliées aux quinze autres lignes, seront mises à 0 volt. Au niveau de cette première matrice les seize colonnes sont sous 5 volts par la borne 41. Cependant, seule la diode D mise sous 5 volts sera bloquée et évitera le passage de courant par la diode: le premier stylet est donc alimenté et le courant dans ce stylet provoque l'impression d'un point noir. Les quinze autres diodes de cette première matrice mises à 0 volt sont passantes: le courant résiduel dans ces quinze stylets dû à la tension de saturation des diodes est très insuffisant pour provoquer une impression. Au niveau des autres matrices toutes les diodes disposées sur la première ligne considérée sont sous 5 volts, ceci reste cependant sans effet puisque les colonnes des autres matrices sont portées à 0 volt: les stylets des autres matrices ne sont pas alimentés. Les diodes permettent ou non de court-circuiter les stylets d'une même matrice, indépendamment les uns des autres. Les diodes permettent également de sélectionner une seule matrice parmi les 108 matrices existantes.

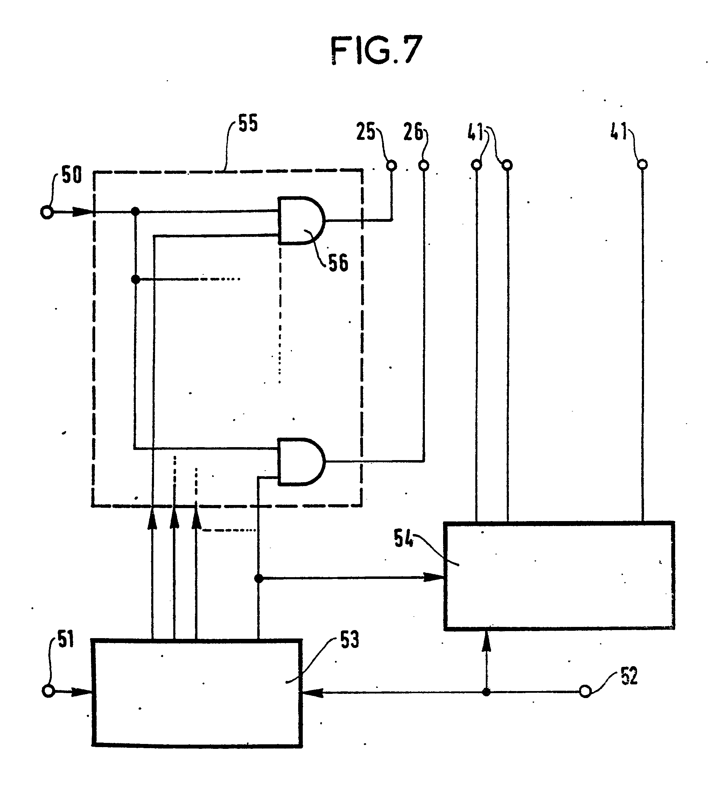

Dans la figure 7, on a schématisé un mode de réalisation d'un circuit de commande du circuit d'adressage. Ce circuit de commande peut être porté par la plaque de circuit imprimé 28 apparaissant dans la figure 4.

On a représenté ce circuit de commande ayant deux entrées de commande. L'une des entrées 50 reçoit le signal d'information pour l'impression d'une ligne, composé d'impulsions de niveau logique 0 (0 volt) pour l'impression d'un point blanc (stylet adressé mais non commandé), ou de niveau logique 1 (5 volts) pour l'impression d'un point noir (stylet adressé et commandé c'est-à-dire traversé par un courant). L'entrée 51 reçoit des impulsions d'horloge au rythme de l'impression des points le long d'une ligne de balayage du papier. Le signal d'information et le signal d'horloge sont synchrones. Une troisième entrée du circuit, 52, reçoit le signal de synchronisation de début de ligne de balayage.

Le circuit de commande des 108 matrices 20 comporte un compteur par 16, 53, connecté à l'entrée 51 recevant le signal d'horloge. Un compteur par 108, 54, est relié à la sortie de rang 16 du compteur 53. Il a 108 sorties reliées respectivement aux 108 premières bornes d'alimentation 41 des 108 matrices pour permettre leur alimentation successivement.

Les seize sorties du compteur 53 sont reliées à un circuit logique combinatoire 55 recevant le signal d'information de l'entrée 50. Ce circuit logique 55 comporte seize portes ET telles que 56, recevant d'une part en parallèle le signal d'information issue de l'entrée 50 et reliées d'autre part, respectivement aux seize sorties du compteur 53. Les sorties des seize portes ET 56 sont reliées respectivement aux seize deuxièmes bornes d'alimentation 25, 26, des 108 matrices d'adressage des stylets.

En fonctionnement, le signal de synchronisation de début de ligne assure une mise forcée du compteur par 108, 54, à l'état 1, par exemple sur la détection de fin de ce signal. La première matrice 20 a ses seize colonnes mises sous 5 volts. Ce même signal issu de la borne 52 assure une mise forcée à zéro du compteur par 16, 53. Les impulsions d'horloge, qui suivent ce signal de synchronisation de ligne, font progresser l'état du compteur par 16 pour la commande des portes ET 56 qui sont donc successivement passantes pour le signal d'information. Pour l'état 1 du compteur 53, l'impulsion correspondante du signal d'information étant au niveau 1 (point noir) la première ligne des 108 matrices sera mise sous 5 volts, les autres lignes étant à 0 volt. Le premier stylet inscrit un point noir. Pour ce même état 1 du compteur 53, l'impulsion correspondante du signal d'information étant au niveau 0 (point blanc), la première ligne, et les autres lignes des matrices sont à 0 volt: le premier stylet n'inscrit rien (l'aspect blanc du papier est maintenu en ce point). L'adressage des stylets et leur alimentation sont ainsi assurés successivement.

La présente invention a été décrite en regard d'exemples chiffrés particuliers ainsi qu'en regard d'une application particulière pour l'impression d'un papier choisi à aspect initial clair. Il est évident que ces exemples ne peuvent conduire à une limitation de la portée de l'invention.

**Revendications**

1. Barrette d'impression d'une image sur un papier sensible, par balayage du papier selon des lignes successives, comportant une pluralité de stylets d'impression (10) alignés sur la longueur d'une ligne de balayage et disposés au pas de définition des points d'une ligne de balayage et comportant n matrices diagonales (20) à diodes, pour l'adressage des stylets, dont les colonnes divisées en n ensembles identiques sont respectivement reliées aux stylets et sont alimentées respectivement à travers des résistances (R) à partir de premières bornes d'alimentation (41) respectivement affectées aux n matrices, et dont les lignes sont communes aux n matrices et connectées respectivement aux colonnes chacune à travers une diode (D) et sont alimentées respectivement à partir de deuxièmes bornes d'alimentation (25, 26) respectivement affectées aux lignes, caractérisé en ce que ladite barrette est constituée par un empilement de plaquettes (1) conductrices isolées les unes des autres et dont une première extrémité de chacune d'elles forme l'un des stylets, empilement dans lequel sont inclues lesdites résistances (R) et lesdites diodes (D) desdites n matrices et en ce que:

—les plaquettes (1) considérées en n ensembles constituent les colonnes des n matrices et comportent chacune, d'une part, une première borne de contact (13) insérée, à une deuxième extrémité sensiblement opposée à la première, dans la plaquette considérée en étant isolée de cette plaquette et reliée électriquement avec lesdites premières bornes de contact des autres plaquettes du même ensemble à la première borne d'alimentation (41) affectée à la matrice correspondante et, d'autre part, une deuxième borne de contact (14) insérée latéralement dans la plaquette considérée en étant isolée électriquement de cette plaquette et reliée électriquement par un conducteur électrique (24) formant l'une des lignes des matrices aux deuxièmes bornes de contact des plaquettes de même rang dans les n ensembles et à la deuxième borne d'alimentation (25, 26) affectée à cette ligne,

—les résistances (R) sont formées chacune par une couche de matériau résistif (37, 17) en contact électrique avec d'une part l'une des plaquettes (1) et d'autre part la première borne de contact (13) de la plaquette considérée ou de la plaquette adjacente,

—les diodes (D) sont formées chacune par une couche de matériau semi-conducteur (38, 18) en contact électrique avec d'une part l'une des plaquettes (1) et d'autre part la deuxième borne de contact (14) de la plaquette considérée ou de la plaquette adjacente.

2. Barrette d'impression selon la revendication 1, caractérisée en ce que, au niveau de chaque matrice d'adressage (20), lesdites premières bornes de contact (13) sont disposées alternativement de part et d'autre du plan transversal médian des plaquettes appartenant à la matrice considérée, les premières bornes de contact situées d'un même côté dudit plan transversal médian étant reliées entre elles pour former une broche de connexion (21, 22) les deux broches de connexion (21, 22) de part et d'autre étant reliées à ladite première borne d'alimentation (41) de la matrice considérée.

3. Barrette d'impression selon la revendication 1 ou 2, caractérisé en ce que lesdites deuxièmes bornes de contact sont alternativement insérées dans l'un et l'autre bord latéral des plaquettes en étant étagées, pour chaque matrice et sur chaque bord latéral, sur la hauteur des plaquettes.

4. Barrette d'impression selon la revendication 3, caractérisée en ce que pour chaque matrice et sur chaque bord latéral de l'ensemble des plaquettes constituant les colonnes d'une matrice, lesdites deuxièmes bornes (14) sont réparties en deux groupes chacun s'étalant sensiblement sur la mi-hauteur et la largeur de l'ensemble des plaquettes considéré, lesdites deuxièmes bornes d'un même groupe étant sensiblement alignées et les deux groupes sensiblement parallèles et distants l'un de l'autre de la mi-hauteur de l'ensemble de plaquettes considéré.

5. Barrette d'impression selon l'une des revendications 1 à 4, dans laquelle chaque plaquette (1) est en matériau conducteur électrique et présente une face (3) recouverte de matériau isolant, dite face isolante, caractérisée en ce que la face de chaque première borne de contact (13), située du côté de la face isolante de la plaquette qui reçoit ladite première borne de contact considérée, porte ledit matériau résistif (17).

6. Barrette d'impression selon la revendication 5, caractérisée en ce que la face de chaque deuxième borne de contact (14), située du côté de la face isolante de la plaquette qui reçoit ladite deuxième borne de contact considérée, porte ledit matériau semi-conducteur (18).

7. Barrette d'impression selon l'une des revendications 1 à 4, dans laquelle chaque plaquette (1) est constituée par une lamelle conductrice (30) et une lamelle isolante (31), caractérisée en ce que pour chaque plaquette (1) la lamelle conductrice (30) porte lesdites première et deuxième bornes de contact (13, 14) et la lamelle isolante (31) le matériau résistif (37) positionné pour chevaucher sur la première borne de contact (13) et la lamelle conductrice (30) et, également, la matériau semi-conducteur (38) positionné pour chevaucher sur la deuxième borne de contact (14), et la lamelle conductrice (30).

8. Barrette d'impression selon l'une des revendications 1 à 4, dans laquelle chaque plaquette (1) est constituée par une lamelle conductrice (30) et une lamelle isolante (31), caractérisée en ce que pour chaque plaquette (1) la lamelle conductrice (30) porte lesdites première et deuxième bornes de contact (13, 14) et porte également ledit matériau résistant venant chevaucher sur la première borne de contact et le matériau semi-conducteur venant chevaucher sur ladite deuxième borne de contact.

**Claims**

1. A bar for printing an image on sensitive paper by scanning the paper along successive lines, the bar comprising many printing styli (10) disposed along a scan line at the pitch of printing dots therealong, and comprising n diagonal diode matrices (20) for addressing the styli (10), the columns of the matrices being divided into n identical sets, being coupled to respective ones of the styli (1) and being fed via resistors (R) from first supply terminals (41), which are respectively affected to n matrices, the lines of the matrices being common to all n matrices and being each connected respectively to the columns via a diode (D) and being fed respectively from second supply terminals (25, 26), which are respectively affected to the lines, characterized by the fact that the bar consists of a stack of thin conductive plates (1), which are insulated from each other and each of which includes a first end that constitutes one of the printing styli, the stack including the resistors (R) and the diodes (D) of the n matrices,

—and characterized in that the plates arranged in n sets build up the columns of n matrices and comprise each a first contact terminal (13), which is inserted at a second end essentially opposed to said first end into the respective plate, the contact terminal being insulated from said plate and being electrically connected together with the first contact terminals of the other plates of this set to the first supply terminal (41), which is assigned to the corresponding matrix, and comprise each a second contact terminal (14) inserted laterally in the respective plate, the terminal being electrically insulated from this plate and being electrically connected by a conductor (24), which constitutes one of the matrix lines, to the second contact terminal of plates of equal rang within the n sets and to the second supply terminal (25, 26) assigned to that line,

—and characterized by the fact that each resistor (R) is formed by a film of resistive material (37, 17) in electric contact firstly with one of the plates (1) and secondly with the first contact terminal (13) of the said one of the plates or the adjacent plate,

—and characterized in that each diode (D) is formed by a film of semiconductive material (38, 18) in electric contact firstly with one of the plates (1) and secondly with the second contact terminal (14) inserted in the said one of the plates or the adjacent plate.

2. A printing bar according to claim 1, characterized in that at each addressing matrix (20), said first contact terminals (13) are disposed alternately on either side of the transversal centre plane of the plates which belong to the matrix in question, the first contact terminals situated on a same side of said transversal centre plane being connected together and forming a connection pin (21, 22), the two connection pins (21, 22) on either side being connected to said first feed terminal (41) of the matrix in question.

3. A printing bar according to claim 1 or 2, characterized in that said second contact terminals are alternately inserted in either of the sides of the plates and are staggered for each matrix and on each side along the height of the plates.

4. A printing bar according to claim 3, characterized in that for each matrix and on each side of the set of plates constituting the columns of a matrix, said second terminals (14) are divided in two groups, each group being distributed substantially across middle height and width of the set of plates in question, said second contact terminals of a same group being substantially aligned and the two groups substantially parallel and distant from each other of the middle height of the set of plates in question.

5. A printing bar according to one of the claims 1 to 4, in which each plate (1) is made of an electrically conductive material, which has a surface (3) which is covered with insulating material referred to as the insulating surface (3), characterized in that the surface of each first contact terminal (13) situated on the side of the insulating surface of the plate which receives said first contact terminal in question, carries said resistive material (17).

6. A printing bar according to claim 5, characterized in that the surface of each second contact terminal (14) situated on the side of the insulating surface of the plate which receives said second contact terminal in question, carries said semi-conductive material (18).

7. A printing bar according to one of claims 1 to 4, in which each plate (1) is constituted by a conductive lamina (30) and an insulating lamina (31), characterized in that the conductive lamina (30) of each plate carries said first and second contact terminals (13, 14) and that the insulating lamina (31) carries the resistive material (37) positioned to overlap on the first contact terminal (13) and the conductive lamina (30), and also carries the semiconductive material (38) positioned so as to overlap on the second contact terminal (14) and the conductive lamina (30).

8. A printing bar according to one of claims 1 to 4, in which each plate (1) is constituted by a conductive lamina (30) and an insulating lamina (31), characterized in that the conductive lamina (30) of each plate (1) carries said first and second contact terminals (13, 14) and also carries said resistive material which overlaps on the first contact terminal, and the semiconductive material which overlaps on said second contact terminal.

**Patentansprüche**

1. Zeilendruckkopf zum Aufdrucken eines Bildes auf sensibles Papier mittels Überstreichen von aufeinanderfolgenden Zeilen des Papiers, mit einer Vielzahl von Druckstempeln (10), die entlang einer abzutastenden Zeile im Abstand der Punktauflösung aufgereiht sind und mit n diagonalen, der Adressierung der Stempel dienenden Dioden-Matrizen (20), deren in n gleiche Sätze aufgeteilte Spalten je mit den Druckstempeln verbunden und über Widerstände (R) von ersten, den n Matrizen zugeordneten Versorgungsklemmen (41) mit Strom versorgt werden und deren Zeilen allen n Matrizen gemeinsam sind und mit den Spalten je über eine Diode (D) verbunden sind, sowie von zweiten Versorgungsklemmen (25, 26), die den einzelnen Zeilen zugeordnet sind, versorgt werden, dadurch gekennzeichnet, daß der Zeilendruckkopf aus einem Stapel gegeneinander isolierter leitender Plättchen (1) besteht, die an einem Ende Stempelform besitzen, wobei in den Stapel die Widerstände (R) und Dioden (D) der n Matrizen eingefügt sind,

—daß die Plättchen (1) in n Sätze eingeteilt die Spalten der n Matrizen bilden und je einerseits einen ersten Kontaktanschluß (13), der am dem ersten Ende i.w. entgegengesetzten zweiten Ende des Plättchens isoliert von diesem eingefügt ist und elektrisch zusammen mit den ersten Kontaktanschlüssen der anderen Plättchen desselben Satzes an den ersten der betreffenden Matrix zugeordneten Versorgungsanschluß (41) angeschlossen ist, sowie andererseits einen zweiten Kontaktanschluß (14) aufweisen, der seitlich in das betrachtete Plättchen isoliert von diesem und über einen eine der Zeilen der Matrix bildenden elektrischen Leiter (24) mit den zweiten Kontaktanschlüssen der Plättchen gleichen Rangs in den n Sätzen sowie mit dem zweiten diesen Zeilen zugeordneten Versorgungsanschluß (25, 26) in elektrischer Verbindung stehend eingefügt ist,

—daß die Widerstände (R) je aus einer Schicht Widerstandsmaterial (37, 17) bestehen, die in elektrischem Kontakt einerseits mit einem der Plättchen (1) und andererseits mit dem ersten Kontaktanschluß (13) des betrachteten Plättchens oder des benachbarten Plättchens stehen,

—und daß die Dioden (D) je aus einer Schicht Halbleitermaterial (38, 18) bestehen, die in elektrischem Kontakt einerseits mit einem der Plättchen (1) und andererseits mit dem zweiten Kontaktanschluß (14) des betrachteten Plättchens oder des benachbarten Plättchens stehen.

2. Zeilendruckkopf nach Anspruch 1, dadurch gekennzeichnet, daß in Höhe jeder Adressier-Matrix (20) die ersten Kontaktanschlüsse (13) abwechselnd beiderseits der mittleren Querebene der zur betrachteten Matrix gehörenden Plättchen angeordnet sind, wobei die ersten Kontaktanschlüsse, die sich auf der gleichen Seite der mittleren Querebene befinden, miteinander verbunden sind und eine Kontaktfahne (21, 22) bilden, und wobei die zu beiden Seiten liegenden zwei Kontaktfahnen (21, 22) mit dem ersten Versorgungsanschluß (41) der Matrix verbunden sind.

3. Zeilendruckkopf nach Anspruch 1 oder 2, dadurch gekennzeichnet, daß die zweiten Kontaktanschlüsse abwechselnd an beiden Seitenrändern der Plättchen in diese eingefügt und für jede Matrix und auf jedem Seitenrand höhenmäßig abgestuft sind.

4. Zeilendruckkopf nach Anspruch 3, dadurch gekennzeichnet, daß für jede Matrix und jeden Seitenrand des Satzes von Plättchen, die die Spalten einer Matrix bilden, die zweiten Anschlüsse (14) in zwei Gruppen aufgeteilt sind, von denen jede sich im wesentlichen bis zur mittleren Höhe und über die Breite des Plättchensatzes verteilt, wobei die zweiten Anschlüsse einer Gruppe i.w. fluchtend angeordnet sind und die zwei Gruppen i.w. parallel und entfernt voneinander von der mittleren Höhe des Plättchensatzes liegen.

5. Zeilendruckkopf nach einem der Ansprüche 1 bis 4, bei dem jedes Plättchen (1) aus elektrisch leitfähigem Material besteht und eine Seite (3) aufweist, die mit Isoliermaterial bedeckt ist und Isolierseite genannt wird, dadurch gekennzeichnet, daß die Seite jedes ersten Kontaktanschlusses (13), die sich auf der Isolierseite des Plättchens befindet, die den betrachteten ersten Kontaktanschluß aufnimmt, das Widerstandsmaterial (17) trägt.

6. Zeilendruckkopf nach Anspruch 5, dadurch gekennzeichnet, daß die Seite jedes zweiten Kontaktanschlusses (14), die sich auf der Isolierseite des Plättchens befindet, die den betrachteten zweiten Kontaktanschluß aufnimmt, das Halbleitermaterial (18) trägt.

7. Zeilendruckkopf nach einem der Ansprüche 1 bis 4, bei dem jedes Plättchen (1) aus einer Leitschicht (30) und einer Isolierschicht (31) besteht, dadurch gekennzeichnet, daß für jedes Plättchen (1) die Leitschicht (30) die ersten und zweiten Kontaktanschlüsse (13, 14) trägt und die Isolierschicht (31) das Widerstandsmaterial (37), das so angeordnet ist, daß es den ersten Kontaktanschluß (13) und die Leitschicht (30) überlappt, und das Halbleitermaterial (38) trägt, das so angeordnet ist, daß es den zweiten Kontaktanschluß (14) und die Leitschicht (30) überlappt.

8. Zeilendruckkopf nach einem der Ansprüche 1 bis 4, bei dem jedes Plättchen (1) aus einer Leitschicht (30) und einer Isolierschicht (31) besteht, dadurch gekennzeichnet, daß für jedes Plättchen (1) die Leitschicht (30) die ersten und zweiten Kontaktanschlüsse (13, 14) und außerdem das Widerstandsmaterial, das den ersten Kontaktanschluß überlappt, und das Halbleitermaterial, das den zweiten Kontaktanschluß überlappt, trägt.

# FIG. 1

# FIG. 2

# FIG.3

# FIG.4

# FIG. 5

FIG.6

# FIG.7